# EUROPEAN PATENT APPLICATION

(11) **EP 2 808 116 A2**
(43) Date of publication of application: **03.12.2014**
(21) Application number: 14396001.1
(22) Date of filing: 21.01.2014
(51) Int. Cl.: B23K 9/095, B23K 9/32, B23K 9/10

(54) **Welding control method and control device**

(30) Priority: 29.05.2013 FI 20130150
(71) Applicant: Protomet Särkiniemi T:mi, 20780 Kaarina (FI)
(72) Inventor: Särkiniemi, Veijo, FI-20780 Kaarina (FI)
(74) Representative: Pirhonen, Kari Lennart

(57) **Abstract**

Welding control method and control apparatus, by means of which the welding current is controlled during welding such that the temperature of the weld joint and/or component to be welded remains as close as possible to the same temperature. The welding current is reduced evenly and linearly or the welding current is controlled continuously according to any variable function or curve. The welding current can also be controlled gradually or in appropriate steps in the desired direction.

## Description

### OBJECT OF THE INVENTION

The object of the invention is a method for controlling welding.

### PRIOR ART

When welding with known methods, the temperature in the weld joint tends to rise. The rise in temperature has many detrimental effects on both the weld joint itself and the crystal structure and strength of the components to be welded. The most visible drawback of the rise in temperature in the weld joint is the fact that the joint surface drops continuously as the temperature rises. At some point, the temperature in the weld joint rises so high that the joint surface also drops too much, in which case the joint quality is no longer acceptable. In such a situation, there is no other option than to interrupt the welding and to let the spot to be welded cool down sufficiently. Only after that can the welding be continued again so that the joint quality is acceptable.

### METHOD

The purpose of this invention is to create a welding method that overcomes the above-mentioned drawbacks. The method according to the invention is characterised in that the temperature of the weld joint and/or component to be welded is controlled during welding by controlling the electric power to be used in welding. The electric power to be used in welding is controlled such that the welding current or welding voltage is controlled, or that both the welding current and voltage are controlled simultaneously. The electric power is then controlled so that, for example, the welding current is maintained at a suitable level, in which case the temperature in the weld joint and/or in the component to be welded does not become too high.

According to the invention, the welding current, for example, is controlled during welding such that the temperature of the weld joint and/or component to be welded remains constant or as close as possible to the same temperature, such that the joint becomes as consistent as possible and acceptable in terms of quality throughout. Most advantageously, the welding current is controlled during welding, based on the temperature of the weld joint and/or component to be welded, such that the welding current is reduced if the temperature of the weld joint and/or component to be welded rises.

When controlling the electric power used in welding, the welding current can be controlled in many different ways, such that the welding current controls the temperature of the weld joint and/or component to be welded and the quality of the weld joint. The welding current control can thus be continuous, such that the welding current is reduced evenly and linearly during welding as a function of time. However, the welding current can also be controlled in a continuous manner according to any variable function or curve, such that the welding current decreases when required and, in some cases, also increases.

However, the change in the welding current does not always need to be continuous or even, because the welding current control can also be realised such that the change in the welding current during welding occurs in gradual or appropriate steps in the desired direction. If the magnitude of the steps is reduced and the change frequency is increased when controlling the welding current, at some point even a gradual control method will correspond to an even, continuous control method.

According to the invention, the welding current control can simply be made such that the control apparatus or the welding apparatus itself reduces the welding current for a predetermined time. The decrease in the welding current can then also be determined in advance, such that the welding current changes linearly from the start value to the end value during a predetermined time period. The time period can be, for example, some 60 seconds or approximately the time required to weld with one welding electrode when welding. The welding time can also be shorter, if the joint is so short that it does not require an entire welding electrode. What is essential is that the welding current is reduced during the welding of the weld joint. Most advantageously, the length of the joint to be welded determines how much the welding current is reduced. In this case, the time used for welding is not decisive.

The reduction in the welding current during this time period can be, for example, 10%-20%, or even 50%, but it can also be smaller or greater than these values. In this case, during the predetermined time period, which is, for example, 60 seconds, the welding current decreases, for example, from the start value of 170 A to the end value of 150 A. The start value can also be, for example, 150 A and the end value 130 A or the start value, for example, 230 A and the end value 180 A.

For example, if the indicative welding current specified by the welding electrode manufacturer is 90 A-140 A, the welding can be set to be controlled, for example, such that the starting current is 135 A. After that the welding current decreases, for example, during 60 seconds, evenly down to the value of 90 A. If the welding still continues uninterrupted after 60 seconds, the welding current is maintained at the value of 90 A until the end of the welding operation. This procedure substantially reduces imperfections in the weld joint compared to welding performed in the known manner where the welding current remains essentially the same. According to the invention, it is also possible to additionally use a temperature measuring apparatus, if required, such as a temperature sensor, which allows the welding current to be controlled with even greater accuracy such that the temperature of the component in conjunction with the weld joint remains sufficiently low and as even as possible.

The method according to the invention provides the excellent advantage that the weld joint can be produced in longer cycles or even completely uninterrupted. While the quality of the weld joint improves, the total time required for the welding operation decreases, as there is no need to interrupt the welding and wait for the component to cool down. The drawback with known welding methods has been that the component to be welded easily warms up too much. As many metals are not allowed to get too hot, it has been necessary, when using known methods, to repeatedly interrupt the welding and wait for the component to be welded to cool down.

According to the invention, the value of the welding current can also be set to return to its start value always when the welding of a joint is completed or when the welding electrode ceases to burn. After that, when the welding is started again, the welding current will decrease again in the desired manner. The welding current decrease rate can be maintained the same, but another possibility is to adjust the welding current decrease rate separately each time, especially when the joints to be welded are different in length.

The method according to the invention for reducing the welding current during welding is particularly well-suited to be used in metal arc welding and in TIG welding, but the method can also be used in other welding methods and in robot welding.

The method according to the invention can also be used in tacking of welds. Thus, the time used for continuous welding can be, for example, in the range of 1 second-2 minutes and the change in the welding current or welding power for example 5%-50%. In tacking, the most advantageous procedure is to start at the electrode's lower limit, where the appropriate welding current is, for example, 90 A, after which the welding current drops to, for example, a value of 60 A.

### CONTROL APPARATUS

The object of the invention is also a control apparatus for controlling welding. The control apparatus according to the invention is characterised in that the control apparatus is a separate control apparatus to be attached to the welding apparatus or a control apparatus incorporated in the welding apparatus, which, during welding, controls the electric power to be used in welding in order to control the temperature of the weld joint and/or component to be welded.

The control apparatus can be arranged to control the welding current and/or the welding voltage of the welding apparatus during welding. Most advantageously, the control apparatus controls the welding power such that the welding current of the welding apparatus changes from the start value to the end value during a predetermined time period, in which case the time period can be, for example, 1 second-2 minutes, most advantageously about 60 seconds, during which the welding current decreases, for example, 5%-50 %, most advantageously 10%-20%.

Where the control apparatus has been made into a separate apparatus, it can be attached to replace an electric welding apparatus's remote control apparatus that can be used to control the welding current of the welding apparatus. The apparatus according to the invention controls the welding current for example such that the welding current most advantageously changes, linearly or otherwise, from the start value to the end value during a predetermined time period or during the time period used for welding. At its simplest, the time period can be, for example, some 60 seconds or approximately the time required to weld with one welding electrode when welding, but the welding time can also be shorter, for example if the joint to be welded is short. The decrease in welding current during this time period can also vary.

The control apparatus may include an infrared sensor or similar temperature-measuring apparatus, which, during welding, controls the welding current based on the temperature of the weld joint and/or component to be welded, so that the welding current decreases when the temperature of the weld joint and/or component to be welded rises.

According to the invention, the operation of the welding control apparatus can be activated, for example, manually, such that the start button of the control apparatus is pushed in conjunction with the starting of the welding. However, the pushing of the button does not need to occur exactly simultaneously with the starting of the welding. Alternatively, the control apparatus starts to operate automatically when welding is started. When the operation of the control apparatus is made automatic, the operation of the control apparatus can be programmed to operate with the help of a computer or a processor, for example. In this case, the control apparatus can be programmed to take into account, for example, tackings, interruptions and longer uninterrupted welding processes. Various sensors, such as a temperature sensor and/or a motion sensor, that control the computer can then be attached to the control apparatus.

In the following, the invention is described using examples with reference to the appended drawings, in which

### LIST OF FIGURES

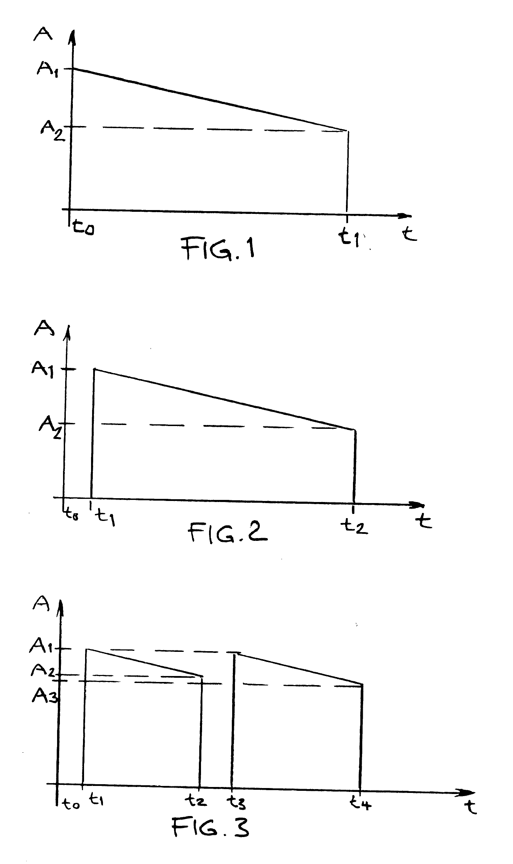

Figures 1-5 schematically show examples of the controlling method according to the invention.

### DESCRIPTION OF THE FIGURES

Figure 1 shows a diagram, where the welding current A is on the vertical axis and time t is on the horizontal axis. In the example of Figure 1, the value of the welding current A at the welding starting time t₀ is A₁. According to the invention, the welding current is linearly reduced during welding as a function of time such that the value of the welding current at the stopping time t₁ is A₂. In this example, for example, an automatic control apparatus has been used to start the controlling of the welding current at the same time as the welding is started.
Figure 2 shows a similar diagram as Figure 1, but in this case the control apparatus is started manually by pushing its start button. In Figure 2, it can be seen that the welder has not started the control apparatus at exactly the same time to as the welding has been started. As a result of this, the control apparatus only starts at the time t₁ and stops when the welding is stopped at the time t₂. In practice, the time difference between to and t₁ has little significance for the end result of the welding and the quality of the weld joint.
Figure 3 shows a diagram, where the welding has been interrupted. The first welding phase is within the time range t₁-t₂ and the second phase between t₃ and t₄. In the starting situation t₁ of the first welding phase, the welding current is A₁ and decreases during welding such that it is A₂ when the welding is interrupted at the time t₁. When the second welding phase is started at the time t₃, the welding current is again the same as in the beginning of the first phase, i.e. A₁, and drops to the value A₃ when this phase ends at the time t₄.

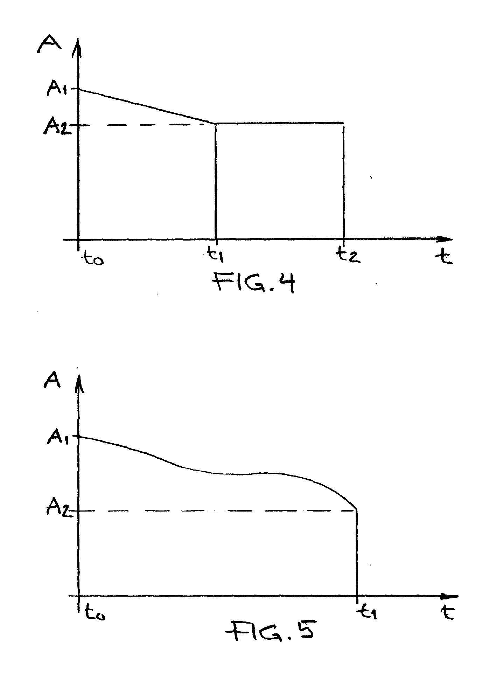

Figure 4 shows a diagram, where the welding current drops in the first welding phase within the time range
   to - t₁, in the same way as in the figures shown above, from the welding current value A₁ to the value A₂. In this example, the welding continues, however, further during the time range t₁- t₂, in which case the welding current A₂ is sufficient and it does not need to be reduced any further.
Figure 5 shows yet another diagram where the decrease of the welding current does not take place linearly in the time range t₀-t₁. It can basically take place according to any function. In this case, the magnitude of the welding current A may be influenced by, for example, a temperature sensor attached to the control apparatus.

## Claims

1. Welding control method, **characterised in that** the temperature of the weld joint and/or component to be welded is controlled during welding by controlling the electric power to be used in welding.

2. Welding control method according to claim 1, **characterised in that** the electric power to be used in welding is controlled such that the welding current or welding voltage is controlled, or that both the welding current and voltage are controlled simultaneously.

3. Welding control method according to claim 1, **characterised in that** the welding current, for example, is controlled during welding such that the temperature of the weld joint and/or component to be welded remains constant or as close as possible to the same temperature, such that the joint becomes as consistent as possible and acceptable in terms of quality throughout.

4. Welding control method according to claim 1, 2 or 3, **characterised in that** the welding current is controlled during welding, based on the temperature of the weld joint and/or component to be welded, such that the welding current is reduced if the temperature of the weld joint and/or component to be welded rises.

5. Welding control method according to any one of claims 1 to 4, **characterized in that**, during welding, the welding current is reduced evehly and linearly as a function of time or the welding current is controlled continuously according to any variable function or curve.

6. Welding control method according to any one of claims 1 to 5, **characterized in that**, during welding, the welding current is controlled in gradual or appropriate steps in the desired direction.

7. Welding control apparatus, **characterised in that** the control apparatus is a separate control apparatus to be attached to the welding apparatus or a control apparatus incorporated in the welding apparatus, which, during welding, controls the electric power to be used in welding in order to control the temperature of the weld joint and/or component to be welded.

8. Welding control apparatus according to claim 7, **characterized in that** the control apparatus has been arranged to control the welding current and/or welding voltage of the welding apparatus during welding.

9. Welding control apparatus according to claim 7 or 8, **characterized in that** the control apparatus controls the welding power such that the welding current of the welding apparatus changes from the start value to the end value during a predetermined time period, in which case the time period can be, for example, 1 second-2 minutes, most advantageously about 60 seconds, in which case the welding current decreases, for example, 5%-50 %, most advantageously 10%-20 %.

10. Welding control apparatus according to claim 7, 8 or 9, **characterized in that** the control apparatus can be attached to replace a remote control apparatus of the welding apparatus, in which case the control apparatus controls the welding current such that it changes, linearly or otherwise, from the start value to the end value during a predetermined time period or during the time period used for welding.

11. Welding control apparatus according to any one of claims 7-10, **characterized in that** the control apparatus includes an infrared sensor or similar temperature-measuring apparatus, which, during welding, controls the welding current based on the temperature of the weld joint and/or component to be welded, so that the welding current decreases if the temperature of the weld joint and/or component to be welded rises.
